# FASCICULE DE BREVET EUROPEEN

(11) **EP 3 507 188 B1**
(45) Date de publication et mention de la délivrance du brevet: **01.07.2020**
(21) Numéro de dépôt: 17771798.0
(22) Date de dépôt: 25.08.2017
(51) Int. Cl.: B63B 35/79, F16B 45/00

(54) **SYSTEME D'ACCROCHAGE, ENSEMBLE EQUIPEMENT SOLIDAIRE D'UN UTILISATEUR - SYSTEME D'ACCROCHAGE ET BARRE D'AILE DE KITESURF**
KUPPLUNGSSYSTEM, MIT EINEM BENUTZER STARR VERBUNDENE AUSRÜSTUNGSANORDNUNG, KUPPLUNGSSYSTEM UND KITE-STANGE FÜR KITEBOARDING
COUPLING SYSTEM, EQUIPMENT ASSEMBLY RIGIDLY CONNECTED TO A USER, COUPLING SYSTEM AND KITEBOARDING KITE BAR

(30) Priorité: 31.08.2016 FR 1658086
(43) Date de publication de la demande: 10.07.2019
(73) Titulaire: Roger, Donatien, 76130 Mont-Saint-Aignan (FR)
(72) Inventeur: Roger, Donatien, 76130 Mont-Saint-Aignan (FR)
(74) Mandataire: Cabinet Chaillot
(86) Numéro de dépôt international: PCT/FR2017/052281
(87) Numéro de publication internationale: WO 2018/042113

(56) Documents cités:
- WO-A1-2013/166596
- DE-A1-102009 029 987
- DE-U1-202011 050 423
- DE-U1-202012 003 062
- US-A1- 2012 049 006
- US-B1- 7 036 771

## Description

La présente invention concerne le domaine sportif des planches aérotractées (plus connues sous leur désignation anglophone de kitesurfs) et plus généralement le domaine nautique, et porte en particulier sur un système d'accrochage pour l'accrochage d'un équipement solidaire d'un utilisateur à au moins un brin de cordage relié, par exemple, à une aile de kitesurf, sur un ensemble équipement solidaire d'un utilisateur - système d'accrochage, et sur une barre d'aile de kitesurf.

Le kitesurf est un sport de glisse consistant à évoluer avec une planche à la surface d'une étendue d'eau en étant tracté par un cerf-volant (« kite » en anglais) spécialement adapté, nommé aile ou voile. Le pratiquant de kitesurf, accroché à l'aile par un harnais, pilote le kitesurf à l'aide d'une barre sur laquelle sont reliées les lignes de traction de l'aile.

Un système de largage sur lequel est fixé le harnais permet, en cas d'urgence, d'annuler la puissance de l'aile en libérant le harnais lorsque le pratiquant de kitesurf actionne ledit système de largage en décrochant la boucle du chicken loop du harnais.

Les systèmes de largage existants, tels que ceux décrits dans la demande de brevet allemand DE102009029987A1 et dans la demande de modèle d'utilité allemand DE202011050424U1, comprennent habituellement un corps central de type monobloc sur lequel est attachée une première extrémité d'une boucle également appelée « chicken loop » en anglais ; un poussoir qui permet de désolidariser la seconde extrémité de la boucle ; la boucle ayant au niveau de sa première extrémité un anneau ou deux brins et au niveau de sa seconde extrémité un crochet, un anneau ou une excroissance qui est libéré(e) lorsque l'utilisateur pousse le poussoir vers le haut ; et éventuellement un dévrilleur de lignes disposé sur la partie supérieure du corps central.

Cependant, le corps central de type monobloc des systèmes de largage existants est une pièce très complexe qui est onéreuse à fabriquer, car elle nécessite de créer un moule très coûteux avec des tiroirs pour démouler le corps central.

En outre, le corps central des systèmes de largage existants possède une hauteur assez importante, et ceci d'autant plus lorsqu'il est surmonté d'un dévrilleur de lignes. En conséquence, il y a une grande distance entre le pratiquant de kitesurf et la barre d'aile de kitesurf, du fait du système de largage qui s'interpose entre les deux. Or, plus le système de largage sera court, plus le pratiquant de kitesurf pourra déventer la voile et donc réduire rapidement et facilement la puissance du kitesurf. Ainsi, actuellement, et surtout lorsque les pratiquants de kitesurf utilisent un harnais de type ceinture, ils ne peuvent pas facilement déventer la voile, le pratiquant devant, pour rappel, pousser la barre loin de lui pour déventer le kitesurf et réduire sa puissance. De plus, les personnes de petite taille qui utilisent un harnais de type ceinture sont souvent à bout de bras alors que le kitesurf conserve de la puissance, la hauteur du système de largage limitant alors leur capacité à déventer.

Une barre d'aile de kitesurf en quatre lignes de cordage comprend deux lignes avant et deux lignes arrière, les deux lignes avant étant connectées au bord d'attaque et retenant près de 90% de la puissance du kitesurf, la puissance sur les lignes arrière étant beaucoup plus faible.

Le corps central des systèmes de largage existants comprend généralement un trou central qui est souvent trop étroit, et rend difficile le passage de la ligne de sécurité, et en particulier la jonction entre la ligne de sécurité et la ligne de kite, si le montage a été conçu sur une ligne avant. Ainsi, beaucoup de fabricants évitent de faire passer la ligne de sécurité à l'intérieur du corps central, ce qui conduit à ne pas déventer complètement la voile en cas de largage d'urgence et peut s'avérer très problématique en termes de sécurité.

Dans le cas d'un corps central de type monobloc, le dévrilleur de lignes est superposé sur le corps central de type monobloc, et ainsi dans le cas où la corde (appelés également le « border-choquer » en français ou « depower rope » en anglais) comprend deux brins, ces derniers ressortent disjoints, et la hauteur totale du système de largage est plus importante.

La présente invention vise à résoudre les inconvénients de l'état antérieur de la technique, en proposant un système d'accrochage pour l'accrochage d'un équipement solidaire d'un utilisateur à au moins un brin de cordage comprenant un corps central constitué de deux parties configurées pour être assemblées l'une à l'autre par un moyen de fixation, ce qui permet un démoulage naturel du corps central et réduit donc le coût de fabrication du moule de corps central qui n'a plus besoin de tiroirs.

L'invention propose également un ensemble équipement solidaire d'un utilisateur - système d'accrochage, et une barre d'aile de kitesurf comprenant le système d'accrochage selon l'invention permettant le largage de l'aile de kitesurf en cas d'urgence.

La présente invention a donc pour objet un système d'accrochage pour l'accrochage d'un équipement solidaire d'un utilisateur à au moins un brin de cordage, caractérisé par le fait qu'il comprend un corps central constitué de deux parties configurées pour être assemblées l'une à l'autre par un moyen de fixation, le corps central possédant une extrémité côté brin de cordage configurée pour la liaison à l'au moins un brin de cordage et une extrémité opposée côté utilisateur ; une attache comprenant deux extrémités, à savoir une première extrémité et une seconde extrémité, ladite attache étant configurée pour se fixer de manière libérable à l'équipement solidaire de l'utilisateur ; une enveloppe configurée pour recouvrir au moins partiellement la surface latérale du corps central ; et au moins un moyen de blocage de seconde extrémité d'attache configuré pour coopérer avec l'enveloppe pour bloquer de manière libérable la seconde extrémité de l'attache au niveau de l'extrémité côté utilisateur du corps central, l'enveloppe étant déplaçable en translation sur la surface latérale du corps central et étant reliée au corps central par l'intermédiaire d'au moins un moyen de rappel élastique, de telle sorte que, dans une position sollicitée écartée du moyen de rappel élastique dans laquelle l'enveloppe ne recouvre pas l'au moins un moyen de blocage, la seconde extrémité de l'attache est configurée pour être insérée dans/retirée de l'au moins un moyen de blocage et, dans une position sollicitée accolée du moyen de rappel élastique dans laquelle l'enveloppe recouvre l'au moins un moyen de blocage et lorsque la seconde extrémité de l'attache est disposée dans l'au moins un moyen de blocage, l'au moins un moyen de blocage est configuré pour bloquer la seconde extrémité de l'attache dans le système d'accrochage.

Selon un premier mode de réalisation de l'invention, la première extrémité de l'attache est configurée pour être bloquée de manière fixe entre les deux parties assemblées du corps central au niveau de l'extrémité côté utilisateur du corps central. L'attache correspond ainsi à une boucle (en anglais « chicken loop ») de largueur classique.

On entend par cordage une corde ou un câble constitué(e) d'un ou plusieurs brins, chaque brin étant réalisé en fibres végétales, en fibres synthétiques et/ou en métal.

Dans la position sollicitée écartée, l'enveloppe est écartée du corps central, tandis que dans la position sollicitée accolée, l'enveloppe est accolée sur le corps central, mais sollicitée pour rester dans cette position.

Un cordage à un ou deux brins, par exemple relié à une aile de kitesurf, est fixé au corps central du système d'accrochage.

L'équipement solidaire de l'utilisateur peut être un harnais porté par l'utilisateur, tel qu'un harnais ceinture, qui peut être fixé sur l'attache fermée du système d'accrochage. Lorsque l'utilisateur pousse l'enveloppe dans la direction opposée à l'attache fermée, l'attache se libère automatiquement, ce qui permet à l'attache (chicken loop) de se désolidariser du harnais et de larguer l'aile de kitesurf en cas d'urgence.

Ainsi, le fait de concevoir le corps central en deux parties permet un démoulage naturel du corps, et réduit donc le coût de fabrication du moule qui ne nécessite pas de tiroirs.

Dans le cas d'une aile de kitesurf, le montage du « border choquer », c'est-à-dire la corde qui relie le système d'accrochage aux deux lignes avant, sur le corps central du système d'accrochage est très rapide, et le système d'accrochage peut être monté une fois que la barre complète de kitesurf a déjà été assemblée, contrairement aux autres systèmes de largage qui nécessitent d'être montés en même temps que la barre de kitesurf.

Il est utile de pouvoir monter et démonter facilement et rapidement le système d'accrochage pour en assurer la maintenance et pour remplacer par exemple l'attache, afin d'augmenter ou de réduire sa taille, par exemple :
- les pratiquants libres (freestyleurs en anglais) professionnels qui décrochent souvent l'attache du harnais pour effectuer des figures apprécient une attache plus grande pour pouvoir facilement se raccrocher au harnais ;
- les personnes de petite taille, et donc avec des petits bras, apprécieront d'avoir une attache la plus courte possible, pour déventer l'aile (le kite) plus rapidement ;
- les compétiteurs en vitesse souhaitent également une attache très courte, pour « border à fond » (autrement dit avoir la puissance maximale le plus près d'eux) ou justement déventer le kite plus rapidement ; et
- les pratiquants de kitesurf qui naviguent dans les vagues apprécieront un système d'accrochage le plus court possible, pour pouvoir déventer le kite si la combinaison de l'action de la vague et du vent a créé un effet de surpuissance dans le kite.

Le système d'accrochage peut ainsi comprendre plusieurs moyens de blocage, pour faciliter l'accrochage de la seconde extrémité d'attache, en laissant plus de possibilités pour ce faire à l'utilisateur.

Selon un second mode de réalisation de l'invention, la première extrémité de l'attache est configurée pour être fixée à l'équipement solidaire de l'utilisateur.

Dans le cas d'un harnais, la première extrémité d'attache peut être reliée directement au harnais par une cordelette ou sur la boucle métallique de harnais, facultativement avec un moyen de rotation.

Ainsi, la distance entre la barre de kitesurf et l'utilisateur est davantage réduite, et une mobilité à 360° de l'utilisateur est assurée.

Dans ce second mode de réalisation, la forme de la seconde extrémité d'attache est de préférence sphérique afin de permettre une rotation du corps central à 360° autour de la seconde extrémité d'attache sphérique.

Selon une caractéristique particulière de l'invention, les deux parties du corps central sont symétriques et configurées pour être assemblées au niveau de leur plan de symétrie.

Les extrémités côté brin de cordage et côté utilisateur du corps central sont, de préférence, toutes les deux contenues dans le plan de symétrie des deux parties du corps central.

Selon une caractéristique particulière de l'invention, le moyen de fixation est au moins un ensemble écrou-vis, la vis étant configurée pour être insérée dans des trous en regard formés dans les deux parties du corps central.

Il est à noter que l'au moins un ensemble écrou-vis pourrait également être remplacé par un autre système de fixation, tel des rivets par exemple. Cependant, dans le cas de rivets, il ne sera pas facile de démonter le système d'accrochage pour en assurer la maintenance.

Le moyen de fixation comprend, de préférence, deux ensembles écrou-vis.

Les deux ensembles écrou-vis servant à visser les deux parties du corps central permettent d'enserrer la première extrémité de l'attache très rapidement et de façon sécurisée.

Il est à noter qu'une des vis des deux ensembles écrou-vis pourrait également être insérée dans un trou formé dans la première extrémité de l'attache afin d'améliorer la fixation de la première extrémité de l'attache dans le corps central du système d'accrochage, sans s'écarter du cadre de la présente invention.

Les ensembles écrou-vis sont en acier inoxydable et assurent une solidité de maintien du corps central et de l'attache.

Le temps de montage du système d'accrochage est très rapide, il suffit de positionner la première extrémité d'attache entre les deux parties du corps central, de visser les écrous sur les vis, puis d'ajouter l'enveloppe servant de poussoir sur la surface du corps central et de positionner le moyen de rappel élastique. Le temps de montage est de l'ordre de quelques minutes seulement, contrairement aux systèmes de largages existants. Le gain de temps se traduit donc par une économie de coûts de main d'œuvre.

Selon une caractéristique particulière de l'invention, chaque moyen de blocage est une mâchoire reliée au corps central par l'intermédiaire d'un axe de rotation disposé sur le corps central, la mâchoire étant de préférence un prolongement de la surface latérale du corps central dans la position sollicitée accolée du moyen de rappel élastique.

Ainsi, la mâchoire permet de bloquer la seconde extrémité de l'attache contre la surface latérale du corps central, l'axe de rotation auquel est reliée la mâchoire permettant la rotation de la mâchoire afin de permettre son ouverture/fermeture.

Dans la position sollicitée écartée du moyen de rappel élastique, l'enveloppe ne recouvre pas la mâchoire, de telle sorte que la mâchoire peut s'ouvrir afin d'insérer la seconde extrémité de l'attache entre la surface latérale du corps central et la mâchoire.

Dans la position sollicitée accolée du moyen de rappel élastique, l'enveloppe recouvre la mâchoire, de telle sorte que la mâchoire se ferme et bloque la seconde extrémité de l'attache contre le corps central.

Selon une caractéristique particulière de l'invention, l'axe de rotation de la mâchoire est la vis de l'au moins un ensemble écrou-vis.

Ainsi, le fait d'assembler les deux parties du corps central permet également d'assembler la mâchoire du système d'accrochage sur le corps central, l'extrémité de la mâchoire recevant la vis en tant qu'axe de rotation étant disposée entre les deux parties assemblées du corps central.

Selon une caractéristique particulière de l'invention, la seconde extrémité de l'attache possède une forme complémentaire de la mâchoire et configurée pour être bloquée par la mâchoire contre le corps central dans la position sollicitée accolée du moyen de rappel élastique.

La surface latérale du corps central en regard de la mâchoire peut également avoir un évidement ayant une forme complémentaire de la seconde extrémité de l'attache afin de permettre un meilleur blocage de la seconde extrémité d'attache dans le système d'accrochage.

Il est à noter que le système d'accrochage pourrait également ne pas comprendre de mâchoire, l'au moins un moyen de blocage étant uniquement la coopération de l'évidement dans la surface latérale du corps central et de la surface interne de l'enveloppe, sans s'écarter du cadre de la présente invention.

Selon une première variante de l'invention, le moyen de rappel élastique est au moins un élastique dont une extrémité est reliée à l'enveloppe et dont l'autre extrémité est reliée au corps central.

Ainsi, la force de rappel de l'au moins un élastique permet le retour de l'enveloppe dans sa position d'origine lorsque l'utilisateur ne pousse plus l'enveloppe en direction de l'au moins un brin de cordage et ainsi le blocage de la seconde extrémité d'attache dans le système d'accrochage. L'extrémité côté utilisateur du corps central comprend, de préférence, une butée contre laquelle l'extrémité côté utilisateur de l'enveloppe vient s'appuyer dans la position sollicitée accolée de l'au moins un élastique.

Selon une seconde variante de l'invention, le moyen de rappel élastique est au moins un ressort de traction dont une extrémité est reliée à l'enveloppe et dont l'autre extrémité est reliée au corps central.

Selon une caractéristique particulière de l'invention, la mâchoire comprend un moyen de rappel élastique de mâchoire.

Ainsi, le moyen de rappel élastique de mâchoire permet d'ouvrir la mâchoire dans sa position sollicitée écartée, et de fermer la mâchoire dans sa position sollicitée accolée. De préférence, la position sollicitée écartée du moyen de rappel élastique de mâchoire a lieu lors la position sollicitée écartée du moyen de rappel élastique d'enveloppe, de telle sorte que la mâchoire s'ouvre lorsque l'utilisateur pousse l'enveloppe vers l'aile de kitesurf.

Selon une caractéristique particulière de l'invention, l'au moins un élastique sert également de moyen de rappel élastique de mâchoire en étant relié, entre ses deux extrémités, à la mâchoire.

Ainsi, l'au moins un élastique constitue à la fois le moyen de rappel élastique d'enveloppe et le moyen de rappel élastique de mâchoire. La sollicitation de l'élastique lorsque l'utilisateur pousse l'enveloppe vers l'au moins un brin de cordage provoquant également l'ouverture de la mâchoire afin de faciliter l'insertion de la seconde extrémité de l'attache entre la mâchoire et le corps central.

Selon une caractéristique particulière de l'invention, le système d'accrochage comprend en outre un dévrilleur de lignes dont la partie inférieure est montée folle dans le trou central du corps central entre les deux parties assemblées au niveau de l'extrémité côté brin de cordage du corps central, le dévrilleur de lignes comprenant un trou central apte à recevoir au moins un brin de cordage, la partie inférieure du dévrilleur de lignes étant configurée pour recevoir, enroulé autour de celle-ci, l'au moins un brin de cordage.

Ainsi, le dévrilleur de lignes est monté fou dans un évidement formé dans le corps central, la rotation du dévrilleur de lignes sur lui-même permettant de facilement dévriller les brins de cordage vrillés. En outre, le dévrilleur de lignes peut être facilement monté entre les deux parties du corps central, en disposant le dévrilleur de lignes entre les deux parties non assemblées au niveau de l'extrémité côté brin de cordage du corps central puis en assemblant entre elles lesdites deux parties à l'aide du moyen de fixation.

Lorsque deux brins de cordage sont insérés dans le trou central du dévrilleur de lignes, lesdits deux brins sortent côte à côte du dévrilleur de lignes vers l'aile de kitesurf.

Lorsque le système d'accrochage dispose d'un dévrilleur de lignes, la partie inférieure de celui-ci est intégrée à l'intérieur des deux pièces assemblées du corps central, ce qui permet de gagner énormément de place en hauteur, et donc de déventer le kite plus facilement. De plus, la course perdue pour déclencher le largage avec l'enveloppe servant de poussoir est utilisée intelligemment pour y placer le dévrilleur de lignes, alors que dans le cas d'un corps central de type monobloc existant, il faudrait placer le dévrilleur de lignes au-dessus du corps central de type monobloc. A titre d'exemple, les systèmes d'accrochage existants font généralement 12 cm de hauteur ou plus, alors que le système d'accrochage selon la présente invention fait, de préférence, 9 cm de hauteur.

Dans le cas du système d'accrochage équipé d'un dévrilleur de lignes et d'un corps central en deux parties, il est possible de faire ressortir les deux brins du « border-choquer » par le trou central, et donc de pouvoir gainer en une fois les cordages qui passent par le centre de la barre, alors que si le dévrilleur de lignes est placé au-dessus du corps central du système d'accrochage et que le corps central est monobloc, le cordage qui relie le système d'accrochage au kite ne pourra pas passer par le centre du système d'accrochage et les cordages seront disjoints, ce qui rendra le gainage difficile, chaque brin devant dans ce cas être gainé séparément.

Selon une caractéristique particulière de l'invention, le trou central du dévrilleur de lignes est recouvert d'une mousse comprenant un orifice dans lequel peut être inséré l'au moins un brin de cordage.

La mousse, de préférence de type caoutchouc EPDM (éthylène-propylène-diène monomère) ou silicone, permet d'amortir les chocs entre la barre de kitesurf et la partie supérieure du dévrilleur de lignes. Ladite mousse peut prendre la forme d'une pastille plate, ou d'une pastille avec un épaulement qui forme un capuchon.

Selon une caractéristique particulière de l'invention, le corps central comprend un trou traversant central dans lequel peut être inséré au moins un brin de cordage.

Ainsi, il est possible de concevoir un trou central plus important que ceux des systèmes d'accrochages existants, qui pourra accueillir également le « border-choquer », et permettre un passage plus facile de la ligne de sécurité. Le passage de la ligne de sécurité dans le trou traversant central du corps central permet d'éviter à la ligne de sécurité de s'entourer autour du système d'accrochage dans le cas où le pratiquant ferait une rotation avec l'aile de kitesurf.

Il est à noter que le corps central pourrait également ne pas comprendre de trou traversant central, la ligne de sécurité étant alors fixée à l'extérieur du corps central, sans s'écarter du cadre de la présente invention.

Selon un autre mode de réalisation de l'invention, l'au moins un moyen de blocage est constitué par les deux parties du corps central symétriques et reliées entre elles par un axe de rotation au niveau de l'extrémité côté brin de cordage du corps central, ledit axe de rotation étant l'au moins un ensemble écrou-vis, la seconde extrémité de l'attache possédant une forme, de préférence sphérique, complémentaire d'un évidement formé dans le corps central et configurée pour être bloquée entre les deux parties du corps central dans la position sollicitée accolée du moyen de rappel élastique.

Ainsi, dans la position sollicitée écartée du moyen de rappel élastique, l'enveloppe ne recouvre pas les deux parties du corps central, de telle sorte que les deux parties du corps central peuvent s'ouvrir afin d'insérer la seconde extrémité de l'attache entre les deux parties du corps central.

Dans la position sollicitée accolée du moyen de rappel élastique, l'enveloppe recouvre les deux parties du corps central, de telle sorte que le corps central se ferme et bloque la seconde extrémité de l'attache dans celui-ci.

Ce système d'accrochage selon cet autre mode de réalisation est inférieur en dimensions et peut, par exemple, être utilisé pour relier un utilisateur à un cordon de sécurité de planche nautique ou d'aile de planche nautique.

Selon une caractéristique particulière de l'invention, l'extrémité côté brin de cordage du corps central est reliée à l'au moins brin de cordage par l'intermédiaire d'une partie de liaison intermédiaire reliée aux deux parties du corps central par l'intermédiaire de l'axe de rotation.

Selon une caractéristique particulière de l'invention, le corps central, l'au moins un moyen de blocage et l'enveloppe sont réalisés en matière plastique, de préférence du polyamide chargé de fibres à 30% ou en polycarbonate, ou en métal, de préférence en alliage d'aluminium.

Cependant, le système d'accrochage sera, de préférence, réalisé en matière plastique pour un critère de poids.

Selon une caractéristique particulière de l'invention, le système d'accrochage comprend en outre un doigt de sécurité disposé au niveau de l'extrémité côté utilisateur du corps central.

Le doigt de sécurité peut être fixé au niveau de la première extrémité de l'attache lorsque ladite première extrémité de l'attache est bloquée de manière fixe entre les deux parties assemblées du corps central.

Le doigt de sécurité peut également être vissé sur l'une des deux parties du corps central, de préférence dans un évidement formé dans l'extrémité côté utilisateur du corps central.

Ainsi, le doigt de sécurité, ou « tchoutch », ou « doigt bloqueur », permet d'éviter, lorsque les lignes de cordage se détendent et que l'aile de kitesurf n'est plus en tension, que l'attache du système d'accrochage ne tombe de l'attache du harnais, ce qui mettrait en difficulté le pratiquant lors d'une reprise de la force du vent dans l'aile de kitesurf, le doigt de sécurité devant être disposé entre l'utilisateur et l'attache.

Selon une caractéristique particulière de l'invention, l'attache est constituée d'une corde ou d'un câble recouvert(e) d'un tube de type polychlorure de vinyle, « PVC », polyuréthane ou polyuréthane thermoplastique (TPU).

Selon une caractéristique particulière de l'invention, le système d'accrochage comprend en outre un anneau de fixation pour un cordon de sécurité d'aile de kitesurf tel qu'un cordon de sécurité ou leash d'aile de kitesurf.

La présente invention a en outre pour objet un ensemble équipement solidaire d'un utilisateur - système d'accrochage comprenant un équipement solidaire d'un utilisateur et un système d'accrochage tel que décrit ci-dessus.

Selon une caractéristique particulière de l'invention, l'équipement solidaire de l'utilisateur est au moins un parmi un harnais, un baudrier, une ceinture de sécurité et une bande d'attache à un poignet ou une cheville, par exemple de type à boucles et crochets.

Selon une caractéristique particulière de l'invention, le système d'accrochage est relié à au moins un brin de cordage lui-même relié à une aile de kitesurf, une barre d'aile de kitesurf, une planche de kitesurf, un trapèze de dériveur, une ligne de vie de bateau, une planche de surf, une aile de planche de surf ou une planche de stand up paddle.

La présente invention a également pour objet une barre d'aile de kitesurf comprenant un système d'accrochage tel que décrit ci-dessus.

La barre d'aile de kitesurf est reliée à l'aile de kitesurf par l'intermédiaire de cordages dont le « border-choquer » qui est relié au système d'accrochage, un harnais porté par l'utilisateur tel qu'un harnais ceinture pouvant être fixé sur l'attache fermée du système d'accrochage.

Pour mieux illustrer l'objet de la présente invention, on va en décrire ci-après, à titre illustratif et non limitatif, deux modes de réalisation préférés, avec référence aux dessins annexés.

Sur ces dessins :
- la Figure 1 est une vue en perspective d'un système d'accrochage selon un premier mode de réalisation de la présente invention dans la position sollicitée accolée du moyen de rappel élastique lorsque l'attache du système d'accrochage est libérée ;
- la Figure 2 est une vue en perspective du système d'accrochage de la Figure 1 dans la position sollicitée écartée du moyen de rappel élastique lorsque l'attache du système d'accrochage est libérée ;
- la Figure 3a est une vue en perspective du système d'accrochage de la Figure 1 dans la position sollicitée écartée du moyen de rappel élastique lorsque l'attache du système d'accrochage est retenue ;
- la Figure 3b est une vue en coupe verticale de la Figure 3a selon le plan de symétrie des deux parties du corps central du système d'accrochage ;
- la Figure 4 est une vue en perspective du système d'accrochage de la Figure 1 dans la position sollicitée accolée du moyen de rappel élastique lorsque l'attache du système d'accrochage est retenue ;
- la Figure 5 est une vue éclatée du système d'accrochage de la Figure 1 ;
- la Figure 6 est une vue en perspective d'un système d'accrochage selon un second mode de réalisation de la présente invention dans la position sollicitée écartée du moyen de rappel élastique lorsque l'attache du système d'accrochage est libérée ;
- la Figure 7 est une vue en perspective du système de la Figure 6 dans la position sollicitée accolée du moyen de rappel élastique lorsque l'attache du système d'accrochage est retenue ; et
- la Figure 8 est une vue éclatée du système d'accrochage de la Figure 6.

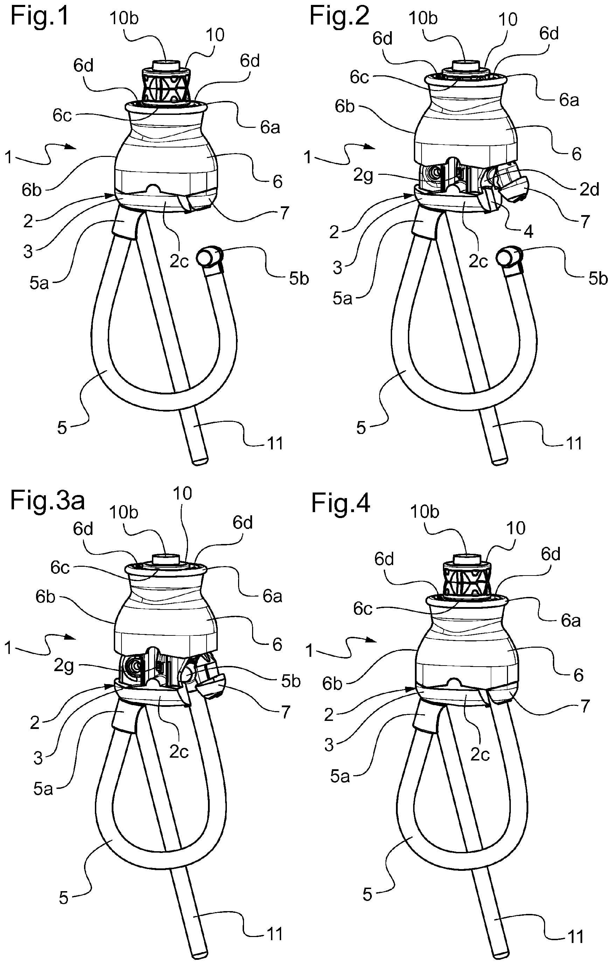

Si l'on se réfère aux Figures 1, 2, 3a, 3b, 4 et 5, on peut voir qu'il y est représenté un système d'accrochage 1 selon un premier mode de réalisation de la présente invention.

Le système d'accrochage 1pour l'accrochage d'un équipement solidaire d'un utilisateur, tel qu'un harnais, à au moins un brin de cordage, par exemple relié à une aile de kitesurf, comprend un corps central 2 constitué de deux parties 3 et 4 configurées pour être assemblées l'une à l'autre par un moyen de fixation qui sera décrit plus en détail par la suite, le corps central 2 possédant une extrémité côté brin de cordage 2a et une extrémité opposée côté utilisateur 2b.

Le fait de concevoir le corps central 2 en deux parties 3 et 4 permet un démoulage naturel du corps central 2 lors de sa conception, et réduit donc le coût de fabrication du moule correspondant qui n'a plus besoin d'avoir de tiroirs.

Le système d'accrochage 1 comprend en outre une attache 5 comprenant deux extrémités 5a et 5b. L'attache 5 est constituée d'une corde ou d'un câble recouvert(e) d'un tube de type polychlorure de vinyle, « PVC », polyuréthane, ou polyuréthane thermoplastique (TPU). L'une des deux extrémités du tube de l'attache 5 est fixée dans la première extrémité d'attache 5a qui a la forme d'un cylindre creux. La seconde extrémité d'attache 5b possède une forme en T, la traverse du T étant en forme de tonneau et le fût du T formant un téton configuré pour être fixé dans l'autre des deux extrémités du tube de l'attache 5 afin de fixer l'attache 5 à la seconde extrémité d'attache 5b.

La première extrémité d'attache 5a est configurée pour être retenue/bloquée de manière fixe entre les deux parties 3 et 4 assemblées au niveau de l'extrémité côté utilisateur 2b du corps central 2.

Il est à noter que la première extrémité d'attache 5a pourrait également être configurée pour être directement fixée à un harnais d'utilisateur, sans s'écarter du cadre de la présente invention.

Le système d'accrochage 1 comprend en outre une enveloppe ou fourreau 6 configuré(e) pour recouvrir au moins partiellement la surface latérale du corps central 2.

L'enveloppe 6 a une forme généralement bitronconique, s'évasant depuis une partie de moindre diamètre dans deux directions opposées, d'une plus courte distance vers la partie supérieure et d'une plus grande distance vers la partie inférieure, et comprend en partie supérieure un col à rebord élargi 6a et en partie inférieure un épaulement 6b.

Le corps central 2 comprend, en partie inférieure au niveau de son extrémité côté utilisateur 2b, une butée 2c sous la forme d'un rebord périphérique tourné côté enveloppe 6, butée 2c contre laquelle la partie inférieure de l'épaulement 6b de l'enveloppe 6 est configurée pour venir en butée lorsque l'enveloppe 6 recouvre la surface latérale du corps central 2.

Le système d'accrochage 1 comprend en outre un moyen de blocage 7 de seconde extrémité d'attache 5b sur le corps central 2 configuré pour coopérer avec l'enveloppe 6 pour bloquer de manière libérable la seconde extrémité 5b de l'attache 5 au niveau de l'extrémité côté utilisateur 2b du corps central 2.

L'enveloppe 6 est déplaçable en translation à la manière d'un fourreau sur la surface latérale du corps central 2 et est reliée au corps central 2 par l'intermédiaire d'au moins un moyen de rappel élastique qui sera décrit plus détail par la suite, de telle sorte que, dans une position sollicitée écartée du moyen de rappel élastique dans laquelle l'enveloppe 6 ne recouvre pas le moyen de blocage 7 en étant écartée du corps central 2, la seconde extrémité 5b de l'attache 5 est configurée pour être insérée dans/retirée du moyen de blocage 7 et, dans une position sollicitée accolée du moyen de rappel élastique dans laquelle l'enveloppe 6 recouvre le moyen de blocage 7 et lorsque la seconde extrémité 5b de l'attache 5 est disposée dans le moyen de blocage 7, le moyen de blocage 7 est configuré pour bloquer la seconde extrémité 5b de l'attache 5 dans le système d'accrochage 1.

Les deux parties 3 et 4 du corps central 2 sont symétriques et configurées pour être assemblées au niveau de leur plan de symétrie.

Le moyen de fixation des deux parties 3 et 4 du corps central 2 est constitué de deux ensembles écrou-vis 8, chaque vis étant configurée pour être insérée dans des trous 9 en regard formés dans les deux parties 3 et 4 du corps central 2.

Les deux ensembles écrou-vis 8 servant à fixer entre elles les deux parties 3 et 4 du corps central 2 permettent d'enserrer la première extrémité 5a de l'attache 5 très rapidement et de façon sécurisée.

La première extrémité 5a de l'attache 5 pourrait également porter un anneau, tel qu'une corde en forme d'anneau, ledit anneau permettant le passage de l'une des vis à travers celui-ci, afin d'améliorer la fixation de la première extrémité 5a de l'attache 5 sur le corps central 2. La première extrémité 5a de l'attache 5 pourrait également porter deux brins de corde pouvant être attachés entre eux autour de l'une des vis.

Il est à noter que le moyen de fixation pourrait également être constitué d'un nombre quelconque d'ensembles écrou-vis 8, sans s'écarter du cadre de la présente invention.

Les ensembles écrou-vis 8 pourraient également être remplacés par un autre système de fixation, tel des rivets par exemple. Cependant, dans le cas de rivets, il ne sera pas facile de démonter le système d'accrochage 1 pour en assurer la maintenance.

Les ensembles écrou-vis 8 sont de préférence en acier inoxydable et assurent une solidité de maintien du corps central 2 et de l'attache 5.

Le temps de montage du système d'accrochage 1 est ainsi très rapide, il suffit de positionner la première extrémité 5a d'attache 5 entre les deux parties 3 et 4 du corps central 2, de visser les écrous sur les vis des ensembles écrou-vis 8, puis d'ajouter l'enveloppe 6 servant de poussoir sur la surface du corps central 2 et de positionner le moyen de rappel élastique. Le temps de montage est de l'ordre de quelques minutes seulement, contrairement aux systèmes de largage existants. Le gain de temps se traduit donc par une économie de coûts de main d'œuvre.

Un harnais (non représenté sur les Figures) porté par l'utilisateur, tel qu'un harnais ceinture, peut ainsi être fixé sur l'attache 5 retenue du système d'accrochage 1. Lorsque l'utilisateur pousse l'enveloppe 6 dans la direction opposée à l'attache 5 retenue, l'attache 5 se libère automatiquement, ce qui permet de libérer le harnais et de larguer l'aile de kitesurf en cas d'urgence.

Le moyen de blocage 7 est une mâchoire reliée au corps central 2 par l'intermédiaire d'un axe de rotation disposé sur le corps central 2, la mâchoire 7 étant un prolongement de la surface latérale du corps central 2 dans la position sollicitée accolée du moyen de rappel élastique, de telle sorte que dans la position dans laquelle l'enveloppe 6 recouvre le corps central 2 et la mâchoire 7, la paroi interne de l'enveloppe épouse la forme de la paroi externe de l'ensemble corps central 2 et mâchoire 7 repliée.

L'axe de rotation de la mâchoire 7 est la vis de l'un des deux ensembles écrou-vis 8.

Le fait d'assembler les deux parties 3 et 4 du corps central 2 permet également d'assembler la mâchoire 7 du système d'accrochage 1 sur le corps central 2, l'extrémité 7a de la mâchoire 7 recevant la vis en tant qu'axe de rotation étant disposée entre les deux parties 3 et 4 assemblées du corps central 2.

La mâchoire 7 permet de bloquer la seconde extrémité 5b de l'attache 5 contre la surface latérale du corps central 2, l'axe de rotation auquel est reliée la mâchoire 7 permettant la rotation de la mâchoire 7 afin de permettre son ouverture/fermeture.

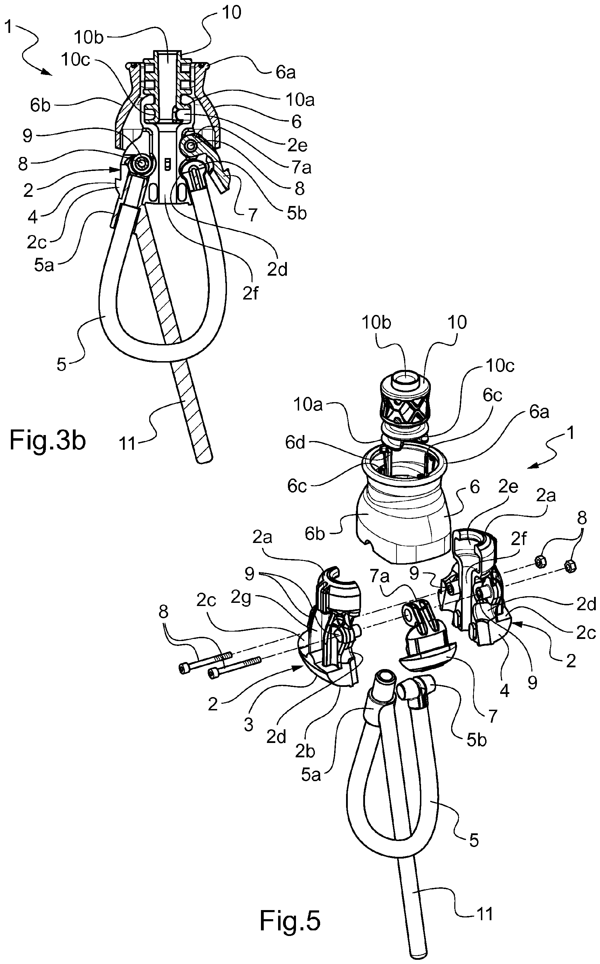

Dans la position sollicitée écartée du moyen de rappel élastique, telle que représentée aux Figures 2, 3a et 3b, l'enveloppe 6 ne recouvre pas la partie supérieure de la mâchoire 7, de telle sorte que la mâchoire 7 peut s'ouvrir afin d'insérer la seconde extrémité 5b de l'attache 5 entre la surface latérale du corps central 2 et la mâchoire 7.

Dans la position sollicitée accolée du moyen de rappel élastique, telle que représentée aux Figures 1 et 4, l'enveloppe 6 recouvre la partie supérieure de la mâchoire 7, de telle sorte que la mâchoire 7 se ferme et bloque la seconde extrémité 5b de l'attache 5 contre le corps central 2.

La face interne de la mâchoire 7 possède une forme complémentaire de la forme en tonneau de la seconde extrémité 5b de l'attache 5.

La surface latérale du corps central 2 en regard de la mâchoire 7 possède un évidement 2d ayant une forme complémentaire de la forme de tonneau de la traverse du T qui forme la seconde extrémité 5b de l'attache 5 afin de permettre un meilleur blocage de la seconde extrémité d'attache 5b dans le système d'accrochage 1.

Il est à noter que le système d'accrochage 1 pourrait également ne pas comprendre de mâchoire 7, le moyen de blocage étant uniquement la coopération de l'évidement 2d dans la surface latérale du corps central 2 et de la surface interne de l'enveloppe 6, sans s'écarter du cadre de la présente invention.

Le moyen de rappel élastique est au moins un élastique (non représenté sur les Figures afin de ne pas surcharger les dessins) dont une extrémité est reliée à la paroi interne de l'enveloppe 6 et dont l'autre extrémité est reliée au corps central 2.

La face interne du col à bord élargi 6a de l'enveloppe 6 comprend deux saillies opposées 6c, et la surface latérale du corps central 2 comprend également deux saillies opposées 2g, les quatre saillies 6c et 2g étant disposées dans un même plan vertical. Ainsi deux élastiques peuvent être disposés entre la face interne de l'enveloppe 6 et la surface latérale du corps central 2, une extrémité de chaque élastique étant insérée dans une encoche formée dans une saillie 6c de l'enveloppe 6 et l'autre extrémité d'élastique étant insérée dans une encoche formée dans une saillie 2g du corps central 2.

La face interne de l'enveloppe 6 comprend également deux languettes verticales opposées 6d configurées pour permettre le guidage de la translation de l'enveloppe 6 sur la surface latérale du corps central 2.

La force de rappel de l'au moins un élastique permet le retour de l'enveloppe 6 dans sa position d'origine en butée contre la butée 2c du corps central 2 lorsque l'utilisateur ne pousse plus l'enveloppe 6 en direction de l'aile de kitesurf et ainsi le blocage de la seconde extrémité d'attache 5b dans le système d'accrochage 1.

Il est à noter que le moyen de rappel élastique pourrait également être au moins un ressort de traction dont une extrémité est reliée à l'enveloppe 6 et dont l'autre extrémité est reliée au corps central 2, sans s'écarter du cadre de la présente invention.

La mâchoire 7 pourrait également comprendre un moyen de rappel élastique de mâchoire, sans s'écarter du cadre de la présente invention. Le moyen de rappel élastique de mâchoire permettrait alors d'ouvrir la mâchoire 7 dans sa position sollicitée écartée, et de fermer la mâchoire 7 dans sa position écartée accolée. De préférence, la position sollicitée écartée du moyen de rappel élastique de mâchoire aurait lieu lors la position sollicitée écartée du moyen de rappel élastique d'enveloppe, de telle sorte que la mâchoire 7 s'ouvrirait lorsque l'utilisateur pousse l'enveloppe 6 vers l'aile de kitesurf.

Dans le cas où la mâchoire 7 comprend un moyen de rappel élastique de mâchoire, l'au moins un élastique servant de moyen de rappel de l'enveloppe 6 pourrait également servir de moyen de rappel élastique de mâchoire en étant relié, entre ses deux extrémités, à la mâchoire 7. Ainsi, dans ce cas, l'au moins un élastique constitue à la fois le moyen de rappel élastique de l'enveloppe 6 et le moyen de rappel élastique de la mâchoire 7. La sollicitation de l'élastique lorsque l'utilisateur pousse l'enveloppe 6 vers l'aile de kitesurf provoquant également l'ouverture de la mâchoire 7 afin de faciliter l'insertion de la seconde extrémité 5b de l'attache 5 entre la mâchoire 7 et le corps central 2.

Sur la Figure 1, le système d'accrochage 1 est représenté dans la position sollicitée accolée du moyen de rappel élastique lorsque l'attache 5 du système d'accrochage 1 est libérée.

Sur la Figure 2, le système d'accrochage 1 est représenté dans la position sollicitée écartée du moyen de rappel élastique lorsque l'attache 5 du système d'accrochage 1 est libérée. Pour cela l'utilisateur doit pousser l'enveloppe 6 vers l'aile de kitesurf, à l'opposé du corps central 2.

Sur les Figures 3a et 3b, le système d'accrochage 1 est représenté dans la position sollicitée écartée du moyen de rappel élastique lorsque l'attache 5 du système d'accrochage 1 est retenue. Pour cela l'utilisateur doit positionner la seconde extrémité 5b de l'attache 5 entre la mâchoire 7 et le corps central 2, tout en maintenant l'enveloppe 6 dans la position sollicitée écartée du moyen de rappel élastique.

Sur la Figure 4, le système d'accrochage 1 est représenté dans la position sollicitée accolée du moyen de rappel élastique lorsque l'attache 5 du système d'accrochage 1 est retenue. Pour cela l'utilisateur doit relâcher l'enveloppe 6 afin que cette dernière recouvre la partie supérieure de la mâchoire 7 pour bloquer en position la seconde extrémité 5b de l'attache 5, l'utilisateur pouvant alors fixer un harnais sur l'attache 5 retenue du système d'accrochage 1. En cas d'urgence, l'utilisateur devra pousser l'enveloppe 6 vers l'aile de kitesurf afin d'ouvrir l'attache 5 pour larguer et libérer l'attache du harnais et déventer l'aile de kitesurf.

Le système d'accrochage 1 comprend en outre un dévrilleur de lignes 10 dont la partie inférieure 10a est montée folle dans un évidement 2e formé entre les deux parties 3 et 4 assemblées au niveau de l'extrémité côté brin de cordage 2a du corps central 2.

Le dévrilleur de lignes 10 comprend un trou traversant central 10b apte à recevoir au moins un brin de cordage (non représenté sur les Figures), la partie inférieure 10a du dévrilleur de lignes 10 étant configurée pour recevoir, enroulé autour de celle-ci, l'au moins un brin de cordage.

La partie inférieure 10a du dévrilleur de lignes 10 comprend une rainure circulaire 10c formée sur sa surface latérale et configurée pour permettre l'enroulement de l'au moins un brin provenant du trou central 10b autour de celle-ci.

La rotation du dévrilleur de lignes 10 sur lui-même permet de facilement dévriller les brins de cordage vrillés sortant du dévrilleur de lignes 10. Le dévrilleur de lignes 10 peut être facilement monté entre les deux parties 3 et 4 du corps central 2, en disposant le dévrilleur de lignes 10 entre les deux parties 3 et 4 non assemblées au niveau de l'extrémité côté aile 2a du corps central 2 puis en assemblant entre elles lesdites deux parties 3 et 4 à l'aide des deux ensembles écrou-vis 8.

Lorsqu'une corde est insérée dans le trou central 10b du dévrilleur de lignes 10 puis est enroulée autour de la partie inférieure 10a du dévrilleur de lignes 10, les deux brins de corde sortent alors côte à côte de la partie supérieure du trou central 10b du dévrilleur de lignes 10 vers l'aile de kitesurf.

La partie inférieure 10a du dévrilleur de lignes 10 étant intégrée à l'intérieur du corps central 2, cela permet de gagner de la place en hauteur, et donc de déventer le kite plus facilement.

La partie supérieure du trou central 10b du dévrilleur de lignes 10 pourrait également être recouverte de mousse, de type caoutchouc EPDM (éthylène-propylène-diène monomère) ou silicone ou mousse polyuréthane, de façon à amortir les chocs entre la barre de kitesurf et la partie supérieure du dévrilleur de lignes 10, ladite mousse comprenant un orifice dans lequel peut être inséré l'au moins un brin de cordage, ladite mousse pouvant prendre la forme d'une pastille plate, ou d'une pastille avec un épaulement qui forme un capuchon.

Le corps central 2 comprend également un trou traversant central 2f, en communication avec le trou traversant central 10b du dévrilleur de lignes 10, et dans lequel peut être inséré au moins un brin de cordage tel qu'une ligne de sécurité de kitesurf.

Le corps central 2, la mâchoire 7 et l'enveloppe 6 sont réalisés en matière plastique, de préférence du polyamide chargé de fibres à 30%, mais pourraient également être réalisés en métal, sans s'écarter du cadre de la présente invention.

Le système d'accrochage 1 comprend en outre un doigt de sécurité 11 fixé à la première extrémité 5a de l'attache 5, le doigt de sécurité 11 devant être disposé entre l'utilisateur et l'attache 5 en utilisation.

Il est à noter que le doigt de sécurité 11 pourrait également être fixé sur l'une des deux parties 3 et 4 du corps central 2, sans s'écarter du cadre de la présente invention.

Il est à noter que le système d'accrochage 1 pourrait également comprendre un anneau de fixation pour un cordon de sécurité d'aile de kitesurf tel qu'un cordon de sécurité (plus connu sous la dénomination anglo-saxonne de « leash ») d'aile de kitesurf, sans s'écarter du cadre de la présente invention.

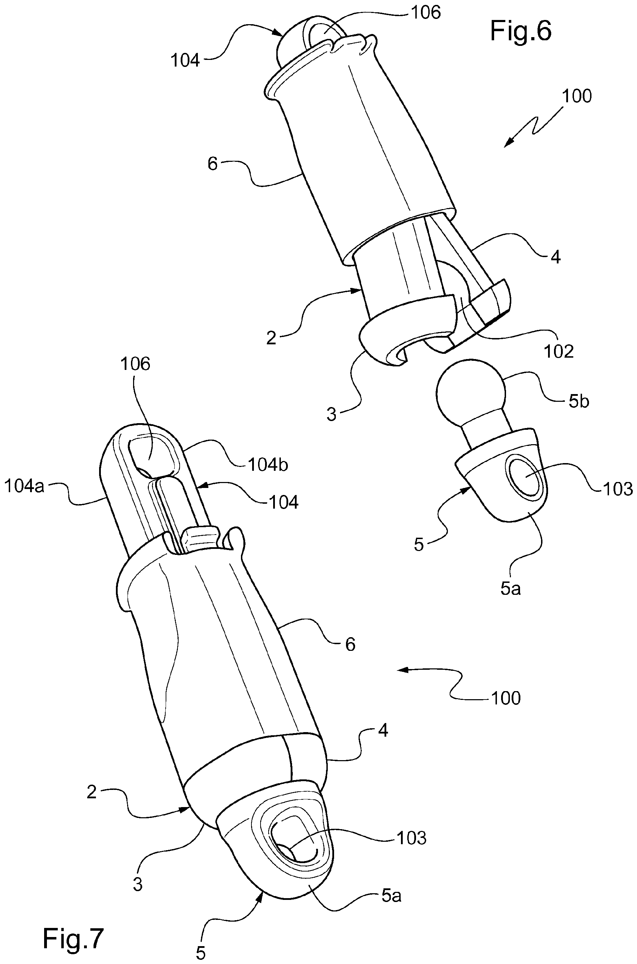

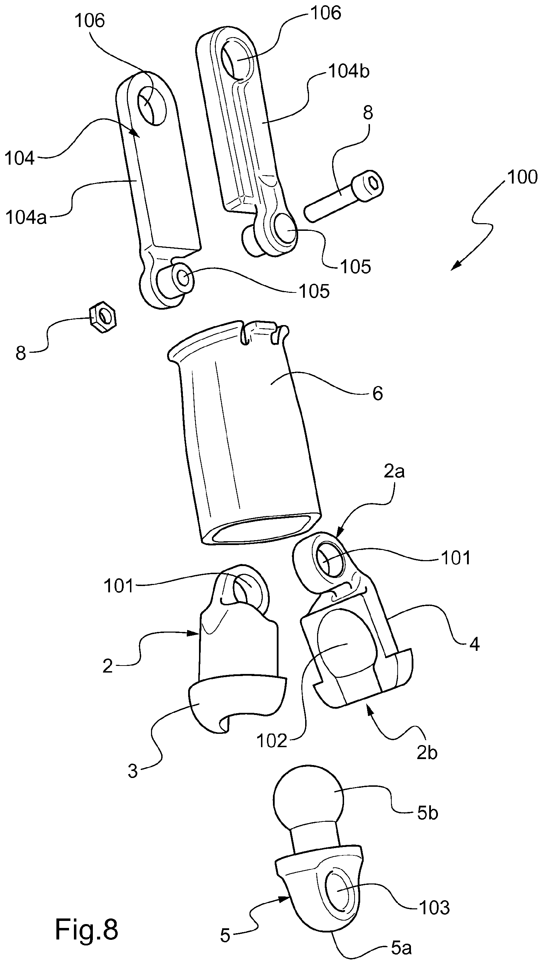

Si l'on se réfère aux Figures 6, 7 et 8, on peut voir qu'il y est représenté un système d'accrochage 100 selon un second mode de réalisation de la présente invention.

Les éléments communs entre le premier mode de réalisation de l'invention et ce second mode de réalisation de l'invention portent le même chiffre de référence et ne seront pas décrits plus en détail ici lorsqu'ils sont de structures identiques.

Dans ce second mode de réalisation de l'invention, le moyen de blocage de seconde extrémité d'attache 5b est constitué par les deux parties 3, 4 du corps central 2, qui sont symétriques et reliées entre elles par un axe de rotation au niveau de l'extrémité côté brin de cordage 2a du corps central 2.

Ledit axe de rotation est formé par un ensemble écrou-vis 8, la vis de l'ensemble écrou-vis 8 passant à travers un trou 101 formé dans chaque partie 3, 4 du corps central 2 au niveau de l'extrémité côté brin de cordage 2a. Les deux parties 3 et 4 du corps central 2 peuvent ainsi s'écarter l'une de l'autre, par rotation autour dudit axe de rotation, lorsque l'enveloppe 6 est poussée par l'utilisateur à l'opposé de ce dernier.

La seconde extrémité 5b de l'attache 5 possède une forme sphérique qui est complémentaire d'un évidement 102 formé dans le corps central 2 et qui est configurée pour être bloquée entre les deux parties 3, 4 du corps central 2 dans la position sollicitée accolée du moyen de rappel élastique.

Un trou 103 est formé dans la première extrémité 5a de l'attache 5 afin de permettre la fixation de l'équipement solidaire de l'utilisateur, tel qu'un harnais, à l'attache 5 du système d'accrochage 100.

L'extrémité côté brin de cordage 2a du corps central 2 est reliée à au moins brin de cordage par l'intermédiaire d'une partie de liaison intermédiaire 104 reliée aux deux parties 3, 4 du corps central 2 par l'intermédiaire de l'axe de rotation.

Ladite partie de liaison intermédiaire 104 est constituée de deux éléments 104a et 104b emboîtables. La partie inférieure de chaque élément 104a et 104b comprend un trou 105 dans lequel est inséré la vis de l'ensemble écrou-vis 8 afin de permettre la fixation du corps central 2 sur la pièce de liaison intermédiaire 104 tout en autorisant sa rotation. La partie supérieure de chaque élément 104a et 104b comprend un trou 106 afin de permettre la fixation d'au moins un brin de cordage à la partie de liaison intermédiaire 104 du système d'accrochage 100.

Telle que représentée à la Figure 6, dans la position sollicitée écartée du moyen de rappel élastique, l'enveloppe 6 ne recouvre pas les deux parties 3 et 4 du corps central 2, de telle sorte que les deux parties 3 et 4 du corps central 2 peuvent s'ouvrir afin d'insérer la seconde extrémité 5b de l'attache 5 entre les deux parties 3 et 4 du corps central 2.

Telle que représentée à la Figure 7, dans la position sollicitée accolée du moyen de rappel élastique, l'enveloppe 6 recouvre les deux parties 3 et 4 du corps central 2, de telle sorte que le corps central 2 se ferme et bloque la seconde extrémité 5b de l'attache 5 dans celui-ci.

L'invention a en outre pour objet un ensemble équipement solidaire d'un utilisateur - système d'accrochage comprenant un équipement solidaire d'un utilisateur et un système d'accrochage 1 ou 100 tel que décrit ci-dessus.

L'équipement solidaire de l'utilisateur est au moins un parmi un harnais, un baudrier, une ceinture de sécurité et une bande d'attache à un poignet ou une cheville, par exemple de type à boucles et crochets.

Le système d'accrochage 1 ou 100 est relié à au moins un brin de cordage lui-même relié à une aile de kitesurf, une barre d'aile de kitesurf, une planche de kitesurf, un trapèze de dériveur, une ligne de vie de bateau, une planche de surf, une aile de planche de surf ou une planche de stand up paddle.

L'invention a également pour objet une barre d'aile de kitesurf comprenant un dispositif d'accrochage 1 ou 100 tel que décrit ci-dessus. La barre d'aile de kitesurf est reliée à l'aile de kitesurf par l'intermédiaire de cordages dont le « border-choquer » qui est relié au système d'accrochage 1 ou 100, un harnais porté par l'utilisateur tel qu'un harnais ceinture pouvant être fixé sur l'attache 5 retenue du système d'accrochage 1 ou 100.

## Revendications

1. Système d'accrochage (1 ; 100) pour l'accrochage d'un équipement solidaire d'un utilisateur à au moins un brin de cordage, le système d'accrochage (1;100) comprenant:
- un corps central (2) possédant une extrémité côté brin de cordage (2a) configurée pour la liaison à l'au moins un brin de cordage et une extrémité opposée côté utilisateur (2b) ;
- une attache (5) comprenant deux extrémités (5a, 5b), à savoir une première extrémité (5a) et une seconde extrémité (5b), ladite attache étant configurée pour se fixer de manière libérable à l'équipement solidaire de l'utilisateur ;
- une enveloppe (6) configurée pour recouvrir au moins partiellement la surface latérale du corps central (2) ; et
- au moins un moyen de blocage de seconde extrémité d'attache (5b) configuré pour coopérer avec l'enveloppe (6) pour bloquer de manière libérable la seconde extrémité (5b) de l'attache (5) au niveau de l'extrémité côté utilisateur (2b) du corps central (2) ;
l'enveloppe (6) étant déplaçable en translation sur la surface latérale du corps central (2) et étant reliée au corps central (2) par l'intermédiaire d'au moins un moyen de rappel élastique, de telle sorte que, dans une position sollicitée écartée du moyen de rappel élastique dans laquelle l'enveloppe (6) ne recouvre pas l'au moins un moyen de blocage, la seconde extrémité (5b) de l'attache (5) est configurée pour être insérée dans/retirée de l'au moins un moyen de blocage et, dans une position sollicitée accolée du moyen de rappel élastique dans laquelle l'enveloppe (6) recouvre l'au moins un moyen de blocage et lorsque la seconde extrémité (5b) de l'attache (5) est disposée dans l'au moins un moyen de blocage, l'au moins un moyen de blocage est configuré pour bloquer la seconde extrémité (5b) de l'attache (5) dans le système d'accrochage (1),
**caractérisé par le fait que** le corps central (2) est constitué de deux parties (3, 4) configurées pour être assemblées l'une à l'autre par un moyen de fixation.

2. Système d'accrochage (1) selon la revendication 1, **caractérisé par le fait que** la première extrémité (5a) de l'attache (5) est configurée pour être bloquée de manière fixe entre les deux parties (3, 4) assemblées du corps central (2) au niveau de l'extrémité côté utilisateur (2b) du corps central (2).

3. Système d'accrochage (100) selon la revendication 1, **caractérisé par le fait que** la première extrémité (5a) de l'attache (5) est configurée pour être fixée à l'équipement solidaire de l'utilisateur.

4. Système d'accrochage (1) selon l'une des revendications 1 à 3, **caractérisé par le fait que** les deux parties (3, 4) du corps central (2) sont symétriques et configurées pour être assemblées au niveau de leur plan de symétrie.

5. Système d'accrochage (1 ; 100) selon l'une des revendications 1 à 4, **caractérisé par le fait que** le moyen de fixation est au moins un ensemble écrou-vis (8), la vis étant configurée pour être insérée dans des trous (9 ; 101) en regard formés dans les deux parties (3, 4) du corps central (2).

6. Système d'accrochage (1) selon l'une des revendications 1 à 5, **caractérisé par le fait que** chaque moyen de blocage est une mâchoire (7) reliée au corps central (2) par l'intermédiaire d'un axe de rotation disposé sur le corps central (2), la mâchoire (7) étant de préférence un prolongement de la surface latérale du corps central (2) dans la position sollicitée accolée du moyen de rappel élastique.

7. Système d'accrochage (1) selon la revendication 6 en dépendance de la revendication 5, **caractérisé par le fait que** l'axe de rotation de la mâchoire (7) est la vis de l'au moins un ensemble écrou-vis (8) .

8. Système d'accrochage (1) selon la revendication 6 ou la revendication 7, **caractérisé par le fait que** la seconde extrémité (5b) de l'attache (5) possède une forme complémentaire de la mâchoire (7) et configurée pour être bloquée par la mâchoire (7) contre le corps central (2) dans la position sollicitée accolée du moyen de rappel élastique.

9. Système d'accrochage (1 ; 100) selon l'une des revendications 1 à 8, **caractérisé par le fait que** le moyen de rappel élastique est au moins un élastique dont une extrémité est reliée à l'enveloppe (6) et dont l'autre extrémité est reliée au corps central (2).

10. Système d'accrochage (1 ; 100) selon l'une des revendications 1 à 8, **caractérisé par le fait que** le moyen de rappel élastique est au moins un ressort de traction dont une extrémité est reliée à l'enveloppe (6) et dont l'autre extrémité est reliée au corps central (2).

11. Système d'accrochage (1) selon l'une des revendications 6 à 10, **caractérisé par le fait que** la mâchoire (7) comprend un moyen de rappel élastique de mâchoire.

12. Système d'accrochage (1) selon la revendication 11 en dépendance de la revendication 9, **caractérisé par le fait que** l'au moins un élastique sert également de moyen de rappel élastique de mâchoire en étant relié, entre ses deux extrémités, à la mâchoire (7).

13. Système d'accrochage (1) selon l'une des revendications 1 à 12, **caractérisé par le fait qu'**il comprend en outre un dévrilleur de lignes (10) dont la partie inférieure (10a) est montée folle dans le trou central du corps central entre les deux parties (3, 4) assemblées au niveau de l'extrémité côté brin de cordage (2a) du corps central (2), le dévrilleur de lignes (10) comprenant un trou central (10b) apte à recevoir l'au moins un brin de cordage, la partie inférieure (10a) du dévrilleur de lignes (10) étant configurée pour recevoir, enroulé autour de celle-ci, l'au moins un brin de cordage.

14. Système d'accrochage (1) selon la revendication 13, **caractérisé par le fait que** le trou central (10b) du dévrilleur de lignes (10) est recouvert d'une mousse comprenant un orifice dans lequel peut être inséré l'au moins un brin de cordage.

15. Système d'accrochage (1) selon l'une des revendications 1 à 14, **caractérisé par le fait que** le corps central (2) comprend un trou traversant central (2f) dans lequel peut être inséré au moins un brin de cordage.

16. Système d'accrochage (100) selon la revendication 5 en dépendance de la revendication 3 ou selon la revendication 9 ou 10 en dépendance de la revendication 5 en dépendance de la revendication 3, **caractérisé par le fait que** l'au moins un moyen de blocage est constitué par les deux parties (3, 4) du corps central (2) symétriques et reliées entre elles par un axe de rotation au niveau de l'extrémité côté brin de cordage (2a) du corps central (2), ledit axe de rotation étant l'au moins un ensemble écrou-vis (8), la seconde extrémité (5b) de l'attache (5) possédant une forme, de préférence sphérique, complémentaire d'un évidement (102) formé dans le corps central (2) et configurée pour être bloquée entre les deux parties (3, 4) du corps central (2) dans la position sollicitée accolée du moyen de rappel élastique.

17. Système d'accrochage (100) selon la revendication 16, **caractérisé par le fait que** l'extrémité côté brin de cordage (2a) du corps central (2) est reliée à l'au moins brin de cordage par l'intermédiaire d'une partie de liaison intermédiaire (104) reliée aux deux parties (3, 4) du corps central (2) par l'intermédiaire de l'axe de rotation.

18. Système d'accrochage (1 ; 100) selon l'une des revendications 1 à 17, **caractérisé par le fait que** le corps central (2), l'au moins un moyen de blocage et l'enveloppe (6) sont réalisés en matière plastique, de préférence du polyamide chargé de fibres à 30%, ou en métal.

19. Système d'accrochage (1) selon l'une des revendications 1 à 18, **caractérisé par le fait qu'**il comprend en outre un doigt de sécurité (11) disposé au niveau de l'extrémité côté utilisateur (2b) du corps central (2).

20. Ensemble équipement solidaire d'un utilisateur - système d'accrochage comprenant un équipement solidaire d'un utilisateur et un système d'accrochage (1 ; 100) selon l'une des revendications 1 à 19.

21. Ensemble équipement solidaire d'un utilisateur - système d'accrochage selon la revendication 20, **caractérisé par le fait que** l'équipement solidaire de l'utilisateur est au moins un parmi un harnais, un baudrier, une ceinture de sécurité et une bande d'attache à un poignet ou une cheville par exemple de type à boucles et crochets.

22. Ensemble équipement solidaire d'un utilisateur - système d'accrochage selon la revendication 20 ou 21, **caractérisé par le fait que** le système d'accrochage (1 ; 100) est relié à au moins un brin de cordage lui-même relié à une aile de kitesurf, une barre d'aile de kitesurf, une planche de kitesurf, un trapèze de dériveur, une ligne de vie de bateau, une planche de surf, une aile de planche de surf ou une planche de stand up paddle.

23. Barre d'aile de kitesurf comprenant un système d'accrochage (1 ; 100) selon l'une des revendications 1 à 19.

## Patentansprüche

1. Kupplungssystem (1; 100) zum Kuppeln einer mit einem Benutzer fest verbundenen Ausrüstung an mindestens einen Seilstrang, wobei das Kupplungssystem (1; 100) umfasst:
- einen zentralen Körper (2), der ein seilstrangseitiges Ende (2a) besitzt, das für die Verbindung an dem mindestens einem Seilstrang konfiguriert ist, und ein gegenüberliegendes benutzerseitiges Ende (2b);
- eine Halterung (5), umfassend zwei Enden (5a, 5b), nämlich ein erstes Ende (5a) und ein zweites Ende (5b), wobei die Halterung konfiguriert ist, um sich lösbar an der mit dem Benutzer fest verbundenen Ausrüstung zu befestigen;
- ein Gehäuse (6), das konfiguriert ist, um die Seitenfläche des zentralen Körpers (2) mindestens teilweise zu bedecken; und
- mindestens ein Blockiermittel des zweiten Halterungsendes (5b), das konfiguriert ist, um mit dem Gehäuse (6) zusammenzuwirken, um das zweite Ende (5b) der Halterung (5) im Bereich des benutzerseitigen Endes (2b) des zentralen Körpers (2) lösbar zu blockieren;
wobei das Gehäuse (6) über die Seitenfläche des zentralen Körpers (2) translatorisch verlagerbar ist und mit dem zentralen Körper (2) über mindestens ein elastisches Rückstellmittel derart verbunden ist, dass in einer beabstandend beanspruchten Position des elastischen Rückstellmittels, in welcher das Gehäuse (6) das mindestens eine Blockiermittel nicht bedeckt, das zweite Ende (5b) der Halterung (5) konfiguriert ist, um in das/aus dem mindestens eine/n Blockiermittel eingesetzt/entfernt zu sein, und in einer anliegend beanspruchten Position des elastischen Rückstellmittels, in welcher das Gehäuse (6) das mindestens eine Blockiermittel bedeckt und wenn das zweite Ende (5b) der Halterung (5) in dem mindestens einen Blockiermittel angeordnet ist, das mindestens eine Blockiermittel konfiguriert ist, um das zweite Ende (5b) der Halterung (5) in dem Kupplungssystem (1) zu blockieren,
**dadurch gekennzeichnet, dass** der zentrale Körper (2) aus zwei Teilen (3, 4) besteht, die konfiguriert sind, um durch ein Befestigungsmittel miteinander verbunden zu sein.

2. Kupplungssystem (1) nach Anspruch 1, **dadurch gekennzeichnet, dass** das erste Ende (5a) der Halterung (5) konfiguriert ist, um zwischen den zwei verbundenen Teilen (3, 4) des zentralen Körpers (2) im Bereich des benutzerseitigen Endes (2b) des zentralen Körpers (2) fest blockiert zu sein.

3. Kupplungssystem (100) nach Anspruch 1, **dadurch gekennzeichnet, dass** das erste Ende (5a) der Halterung (5) konfiguriert ist, um an der mit dem Benutzer fest verbundenen Ausrüstung befestigt zu sein.

4. Kupplungssystem (1) nach einem der Ansprüche 1 bis 3, **dadurch gekennzeichnet, dass** die zwei Teile (3, 4) des zentralen Körpers (2) symmetrisch sind und konfiguriert, um im Bereich ihrer Symmetrieebene verbunden zu sein.

5. Kupplungssystem (1; 100) nach einem der Ansprüche 1 bis 4, **dadurch gekennzeichnet, dass** das Befestigungsmittel mindestens eine Schraube-Mutter-Einheit (8) ist, wobei die Schraube konfiguriert ist, um in zugewandte Löcher (9; 101) eingesetzt zu sein, die in den zwei Teilen (3, 4) des zentralen Körpers (2) ausgebildet sind.

6. Kupplungssystem (1) nach einem der Ansprüche 1 bis 5, **dadurch gekennzeichnet, dass** jedes Blockiermittel eine Backe (7) ist, die mit dem zentralen Körper (2) über eine Rotationsachse verbunden ist, die auf dem zentralen Körper (2) angeordnet ist, wobei die Backe (7) vorzugsweise eine Verlängerung der Seitenfläche des zentralen Körpers (2) in der anliegend beanspruchten Position des elastischen Rückstellmittels ist.

7. Kupplungssystem (1) nach Anspruch 6 in Abhängigkeit von Anspruch 5, **dadurch gekennzeichnet, dass** die Rotationsachse der Backe (7) die Schraube der mindestens einen Schraube-Mutter-Einheit (8) ist.

8. Kupplungssystem (1) nach Anspruch 6 oder Anspruch 7, **dadurch gekennzeichnet, dass** das zweite Ende (5b) der Halterung (5) eine komplementäre Form der Backe (7) besitzt und konfiguriert ist, um von der Backe (7) gegen den zentralen Körper (2) in der anliegend beanspruchten Position des elastischen Rückstellmittels blockiert zu sein.

9. Kupplungssystem (1; 100) nach einem der Ansprüche 1 bis 8, **dadurch gekennzeichnet, dass** das elastische Rückstellmittel mindestens ein Gummi ist, von dem ein Ende mit dem Gehäuse (6) verbunden ist und dessen anderes Ende mit dem zentralen Körper (2) verbunden ist.

10. Kupplungssystem (1; 100) nach einem der Ansprüche 1 bis 8, **dadurch gekennzeichnet, dass** das elastische Rückstellmittel mindestens eine Zugfeder ist, von der ein Ende mit dem Gehäuse (6) verbunden ist und deren anderes Ende mit dem zentralen Körper (2) verbunden ist.

11. Kupplungssystem (1) nach einem der Ansprüche 6 bis 10, **dadurch gekennzeichnet, dass** die Backe (7) ein elastisches Backen-Rückstellmittel umfasst.

12. Kupplungssystem (1) nach Anspruch 11 in Abhängigkeit von Anspruch 9, **dadurch gekennzeichnet, dass** der mindestens eine Gummi ebenfalls als elastisches Backenrückstellmittel dient, indem er zwischen seinen zwei Enden mit der Backe (7) verbunden ist.

13. Kupplungssystem (1) nach einem der Ansprüche 1 bis 12, **dadurch gekennzeichnet, dass** es ferner einen Leitungsentdreher (10) umfasst, dessen unterer Teil (10a) in dem zentralen Loch des zentralen Körpers zwischen den zwei im Bereich des seilstrangseitigen Endes (2a) des zentralen Körpers (2) verbundenen Teilen (3, 4) lose angebracht ist, wobei der Leitungsentdreher (10) ein zentrales Loch (10b) umfasst, das imstande ist, den mindestens einen Seilstrang aufzunehmen, wobei der untere Teil (10a) des Leitungsentdrehers (10) konfiguriert ist, um, um diesen gewickelt, den mindestens einen Seilstrang aufzunehmen.

14. Kupplungssystem (1) nach Anspruch 13, **dadurch gekennzeichnet, dass** das zentrale Loch (10b) des Leitungsentdrehers (10) mit einem Schaumstoff bedeckt ist, umfassend eine Öffnung, in welche der mindestens eine Seilstrang einsetzbar ist.

15. Kupplungssystem (1) nach einem der Ansprüche 1 bis 14, **dadurch gekennzeichnet, dass** der zentrale Körper (2) ein zentrales Durchgangsloch (2f) umfasst, in das mindestens ein Seilstrang einsetzbar ist.

16. Kupplungssystem (100) nach Anspruch 5 in Abhängigkeit von Anspruch 3 oder nach Anspruch 9 oder 10 in Abhängigkeit von Anspruch 5 in Abhängigkeit von Anspruch 3, **dadurch gekennzeichnet, dass** das mindestens eine Blockiermittel aus den zwei symmetrischen und miteinander durch eine Rotationsachse im Bereich des seilstrangseitigen Endes (2a) des zentralen Körpers (2) verbundenen Teilen (3, 4) des zentralen Körpers (2) besteht, wobei die Rotationsachse die mindestens eine Schraube-Mutter-Einheit (8) ist, wobei das zweite Ende (5b) der Halterung (5) eine vorzugsweise sphärische, zu einer Aussparung (102) komplementäre Form besitzt, die im zentralen Körper (2) ausgebildet und konfiguriert ist, um zwischen den zwei Teilen (3, 4) des zentralen Körpers (2) in der anliegend beanspruchten Position des elastischen Rückstellmittels blockiert zu sein.

17. Kupplungssystem (100) nach Anspruch 16, **dadurch gekennzeichnet, dass** das seilstrangseitige Ende (2a) des zentralen Körpers (2) mit dem mindestens einen Seilstrang über einen intermediären Verbindungsteil (104) verbunden ist, der mit den zwei Teilen (3, 4) des zentralen Körpers (2) über die Rotationsachse verbunden ist.

18. Kupplungssystem (1; 100) nach einem der Ansprüche 1 bis 17, **dadurch gekennzeichnet, dass** der zentrale Körper (2), das mindestens eine Blockiermittel und das Gehäuse (6) aus Kunststoffmaterial hergestellt sind, vorzugsweise aus Polyamid, das zu 30 % Fasern enthält, oder aus Metall.

19. Kupplungssystem (1) nach einem der Ansprüche 1 bis 18, **dadurch gekennzeichnet, dass** es ferner einen Sicherheitsfinger (11) umfasst, der im Bereich des benutzerseitigen Endes (2b) des zentralen Körpers (2) angeordnet ist.

20. Einheit mit einem Benutzer fest verbundene Ausrüstung - Kupplungssystem, umfassend eine mit einem Benutzer fest verbundene Ausrüstung und ein Kupplungssystem (1; 100) nach einem der Ansprüche 1 bis 19.

21. Einheit mit einem Benutzer fest verbundene Ausrüstung - Kupplungssystem nach Anspruch 20, **dadurch gekennzeichnet, dass** die mit dem Benutzer fest verbundenen Ausrüstung mindestens eine von einem Geschirr, einem Gehänge, einem Sicherheitsgurt und einem Haltegurt an einem Handgelenk oder einem Knöchel beispielsweise von Typ mit Schlaufen und Haken ist.

22. Einheit mit einem Benutzer fest verbundene Ausrüstung - Kupplungssystem nach Anspruch 20 oder 21, **dadurch gekennzeichnet, dass** das Kupplungssystem (1; 100) an mindestens einem Seilstrang verbunden ist, der selbst mit einem Kitesurffügel, einer Kitesurfflügelstange, einem Kitesurfbrett, einem Jollentrapez, einer Bootsrettungsleine, einem Surfbrett, einem Surfbrettflügel oder einem Stand-up-Paddle-Brett verbunden ist.

23. Kitesurfflügelstange, umfassend ein Kupplungssystem (1; 100) nach einem der Ansprüche 1 bis 19.

## Claims

1. A coupling system (1; 100) for coupling a piece of equipment rigidly connected to a user to at least one rigging strand, the coupling system (1; 100) comprising::
- a central body (2) having an end on the rigging strand side (2a) configured for the connection to the at least one rigging strand and an opposite end on the user side (2b);
- a fastener (5) comprising two ends (5a, 5b), namely a first end (5a) and a second end (5b), said fastener being configured to attach releasably to the piece of equipment rigidly connected to the user;
- a shell (6) configured to at least partially cover the side surface of the central body (2); and
- at least one means for blocking the second end (5b) of the fastener, configured to cooperate with the shell (6) to releasably block the second end (5b) of the fastener (5) at the user-side end (2b) of the central body (2),
the shell (6) being translatable on the side surface of the central body (2) and being connected to the central body (2) via at least one elastic recall means, such that, in a position urged away from the elastic recall means in which the shell (6) does not cover the at least one blocking means, the second end (5b) of the fastener (5) is configured to be inserted in/removed from the at least one blocking means and, in a position urged alongside the elastic recall means in which the shell (6) covers the at least one blocking means and when the second end (5b) of the fastener (5) is arranged in the at least one blocking means, the at least one blocking means is configured to block the second end (5b) of the fastener (5) in the coupling system (1),
**characterized in that** the central body (2) is made up of two parts (3, 4) configured to be assembled with one another via an attachment means.

2. The coupling system (1) according to claim 1, **characterized in that** the first end (5a) of the fastener (5) is configured to be blocked fixedly between the two assembled parts (3, 4) of the central body (2) at the user-side end (2b) of the central body (2).

3. The coupling system (100) according to claim 1, **characterized in that** the first end (5a) of the fastener (5) is configured to be attached to the piece of equipment rigidly connected to the user.

4. The coupling system (1) according to one of claims 1 to 3, **characterized in that** the two parts (3, 4) of the central body (2) are symmetrical and configured to be assembled at their plane of symmetry.

5. The coupling system (1; 100) according to one of claims 1 to 4, **characterized in that** the attachment means is at least one nut-screw assembly (8), the screw being configured to be inserted into opposite holes (9; 101) formed in the two parts (3, 4) of the central body (2).

6. The coupling system (1) according to one of claims 1 to 5, **characterized in that** each blocking means is a jaw (7) connected to the central body (2) via a rotation axis arranged on the central body (2), the jaw (7) preferably being an extension of the side surface of the central body (2) in the position urged alongside the elastic recall means.

7. The coupling system (1) according to claim 6 dependent on claim 5, **characterized in that** the rotation axis of the jaw (7) is the screw of the at least one nut-screw assembly (8).

8. The coupling system (1) according to claim 6 or claim 7, **characterized in that** the second end (5b) of the fastener (5) has a shape complementary to the jaw (7) and configured to be blocked by the jaw (7) against the central body (2) in the position urged alongside the elastic recall means.

9. The coupling system (1; 100) according to one of claims 1 to 8, **characterized in that** the elastic recall means is at least one rubber band, one end of which is connected to the shell (6) and the other end of which is connected to the central body (2).

10. The coupling system (1; 100) according to one of claims 1 to 8, **characterized in that** the elastic recall means is at least one tension spring, one end of which is connected to the shell (6) and the other end of which is connected to the central body (2).

11. The coupling system (1) according to one of claims 6 to 10, **characterized in that** the jaw (7) comprises a jaw elastic recall means.

12. The coupling system (1) according to claim 11 dependent on claim 9, **characterized in that** the at least one rubber band is also used as jaw elastic recall means by being connected, between its two ends, to the jaw (7).

13. The coupling system (1) according to one of claims 1 to 12, **characterized in that** it further comprises a line straightener (10), the lower part (10a) of which is mounted loose in the central hole of the central body between the two assembled parts (3, 4) at the rigging strand-side end (2a) of the central body (2), the line straightener (10) comprising a central hole (10b) able to receive the at least one rigging strand, the lower part (10a) of the line straightener (10) being configured to receive, wound around the latter, the at least one rigging strand.

14. The coupling system (1) according to claim 13, **characterized in that** the central hole (10b) of the line straightener (10) is covered by a foam comprising an orifice in which the at least one rigging strand can be inserted.

15. The coupling system (1) according to one of claims 1 to 14, **characterized in that** the central body (2) comprises a central through hole (2f) in which at least one rigging strand can be inserted.

16. The coupling system (100) according to claim 5 dependent on claim 3 or according to claim 9 or 10 dependent on claim 5 dependent on claim 3, **characterized in that** the at least one blocking means is made up of the two parts (3, 4) of the central body (2) that are symmetrical and connected to one another by a rotation axis at the rigging strand-side end (2a) of the central body (2), said rotation axis being the at least one nut-screw assembly (8), the second end (5b) of the fastener (5) having a shape, preferably spherical, complementary to a recess (102) formed in the central body (2) and configured to be blocked between the two parts (3, 4) of the central body (2) in the position urged alongside the elastic recall means.

17. The coupling system (100) according to claim 16, **characterized in that** the rigging strand-side end (2a) of the central body (2) is connected to the at least one rigging strand via an intermediate connecting part (104) connected to the two parts (3, 4) of the central body (2) via the rotation axis.

18. The coupling system (1; 100) according to one of claims 1 to 17, **characterized in that** the central body (2), the at least one blocking means and the shell (6) are made from plastic, preferably polyamide filled with fibers at 30%, or metal.

19. The coupling system (1) according to one of claims 1 to 18, **characterized in that** it further comprises a safety finger (11) arranged at the user-side end (2b) of the central body (2).

20. An assembly of an equipment rigidly connected to a user with a coupling system comprising a piece of equipment rigidly connected to a user and a coupling system (1; 100) according to one of claims 1 to 19.

21. The assembly of an equipment rigidly connected to a user with a coupling system according to claim 20, **characterized in that** the equipment rigidly connected to the user is at least one from among a harness, a shoulder safety belt, a safety belt and a fastening band to a wrist or ankle, for example of the loop and hook type.

22. The assembly of an equipment rigidly connected to a user with a coupling system according to claim 20 or 21, **characterized in that** the coupling system (1; 100) is connected to at least one rigging strand in turn connected to a kiteboarding kite, a kiteboarding kite bar, a kiteboarding board, a center boarder trapeze, a boat safety deck line, a surfboard, a surfboard kite or a standup paddle board.

23. A kiteboarding kite bar comprising a coupling system (1; 100) according to one of claims 1 to 19.
